# FASCICULE DE BREVET EUROPEEN

(11) **EP 2 655 456 B1**
(45) Date de publication et mention de la délivrance du brevet: **12.02.2020**
(21) Numéro de dépôt: 11810689.7
(22) Date de dépôt: 21.12.2011
(51) Int. Cl.: C08G 8/12, C08G 8/28, C10L 1/00, C10L 10/14, C10L 1/18

(54) **UTILISATION DE RÉSINES ALKYLPHÉNOL-ALDÉHYDE MODIFIÉES, COMME ADDITIFS AMÉLIORANT LES PROPRIÉTÉS À FROID DE CARBURANTS ET COMBUSTIBLES HYDROCARBONÉS LIQUIDES**
VERWENDUNG VON MODIFIZIERTEN ALKYLPHENOLALDEHYDHARZEN ALS ADDITIVE ZUR VERBESSERUNG DER KÄLTEEIGENSCHAFTEN VON FLÜSSIGEN KOHLENWASSERSTOFF- UND KRAFTSTOFFEN
USE OF MODIFIED ALKYLPHENOL ALDEHYDE RESINS AS ADDITIVES FOR IMPROVING THE COLD PROPERTIES OF LIQUID HYDROCARBON FUELS AND FUELS

(30) Priorité: 23.12.2010 FR 1061193
(43) Date de publication de la demande: 30.10.2013
(73) Titulaire: TOTAL MARKETING SERVICES, 92800 Puteaux (FR)
(72) Inventeur: DOLMAZON, Nelly, F-69360 Serezin Du Rhone (FR); PAPIN, Géraldine, F-69007Lyon (FR); TORT, Frédéric, F-69530 Brignais (FR)
(74) Mandataire: Hirsch & Associés
(86) Numéro de dépôt international: PCT/IB2011/055863
(87) Numéro de publication internationale: WO 2012/085865

(56) Documents cités:
- EP-A1- 0 857 776
- EP-A2- 0 311 452
- WO-A1-99/61562
- US-A- 2 743 252

## Description

La présente invention concerne de nouvelles résines alkylphénol- aldéhyde utilisables notamment comme additifs anti-sédimentation des paraffines pour huiles et distillats d'huiles et notamment pour carburants et combustibles hydrocarbonés liquides.

Les résines alkylphénols-aldéhydes issues de la condensation d'alkyl phénol et d'aldéhyde sont connues de longue date comme agents d'amélioration de l'écoulement pour huiles minérales : voir par exemple EP 311 452 qui décrit des produits de condensation d'au moins 80 % mol de dialkylphénols et d'aldéhydes ayant de 1 à 30 atomes de carbone ; EP 857 776 qui décrit l'utilisation de résines alkylphénol-aldéhyde dans laquelle les groupements alkyle de l'alkylphénol ont de 4 à 12 atomes de carbone et l'aldéhyde de 1 à 4 atomes de carbone et ne contenant pas plus de 10 % mol d'alkylphénols ayant plus d'un groupe alkyle, en association avec des co- ou ter-polymères éthylène /ester vinylique pour améliorer la fluidité d'huiles minérales ; EP1 584 673 qui décrit des résines alkylphénol-aldéhyde de Mn entre 1000 et 3000 issues de la condensation d'un aldéhyde en C1-C4 et d'un mélange d'alkylphénols majoritaire en monoalkylphénol, le groupement alkyle ayant de 1 à 20 atomes de carbone destinés à améliorer les propriétés d'écoulement à froid de compositions de carburants ;

WO 99/61562 décrit une composition additive obtenue par mélange d'au moins un produit issu de la condensation d'aldéhydes et/ou de cétones avec au moins un composé aromatique, d'au moins un polymère éthylène et d'au moins un composé azoté polaire différend du produit issu de la condensation d'aldéhydes et/ou de cétones avec au moins un composé aromatique ; US 2,743,252 décrit des résines phénol-aldéhyde modifiées par des groupements amines hydroxylées

Des résines alkylphénol-aldéhyde modifiées ont également été proposées comme additifs pour améliorer l'écoulement à froid d'huiles minérales : EP 1 767 610 décrit des résines alkylphénol dont la réaction de condensation avec les aldéhydes est menée en présence d'acides gras ayant de 2 à 50 atomes de carbone, ou leurs dérivés, tels que des esters.

La présente invention propose de nouvelles résines alkylphénol-aldéhyde modifiées utilisables pour améliorer la stabilité à froid de carburants et combustibles hydrocarbonés liquides et plus particulièrement l'écoulement à basse température en limitant la sédimentation des paraffines contenues dans les carburants et combustibles liquides.

Les résines alkylphénol-aldéhyde modifiées utilisables selon l'invention sont susceptibles d'être obtenues
par réaction de Mannich d'une résine de condensation alkylphénol-aldéhyde
- avec au moins un aldéhyde et/ou une cétone ayant de 1 à 8 atomes de carbone, de préférence de 1 à 4 atomes de carbone ;
- et au moins un composé hydrocarboné ayant au moins un groupement alkylmonoamine ou alkylpolyamine (i.e ayant plusieurs groupements amine) ayant entre 4 et 30 atomes de carbone, dénommé dans ce qui suit alkylamine,
ladite résine de condensation alkylphénol-aldéhyde étant elle-même susceptible d'être obtenue par condensation
- d'au moins un alkylphénol substitué par au moins un groupement alkyle, linéaire ou ramifié, ayant de 1 à 30 atomes de carbone, de préférence un monoalkylphénol,
- avec au moins un aldéhyde et/ou une cétone ayant de 1 à 8 atomes de carbone, de préférence de 1 à 4 atomes de carbone.

Les résines alkylphénol-aldéhyde sont connues en soi.

Selon un mode de réalisation préféré, les résines alkylphénol-aldéhyde modifiées utilisables selon l'invention sont susceptibles d'être obtenues à partir d'au moins un alkylphénol substitué en para ; de préférence au moins le nonylphénol.

Le nombre moyen de noyaux phénoliques par molécule de résine nonylphénol-aldéhyde préféré est de préférence supérieur à 6 et inférieur ou égal à 25 et de préférence compris entre 8 et 17, et plus particulièrement entre 9 et 16 noyaux phénoliques par molécule. Le nombre de noyaux phénoliques peut être déterminé par RMN ou par GPC.

Selon un mode de réalisation préféré, les résines alkylphénol-aldéhyde modifiées utilisables selon l'invention sont susceptibles d'être obtenues à partir d'au moins un aldéhyde et/ou une cétone choisi parmi le formaldéhyde, l'acétaldéhyde, le propionaldéhyde, le butyraldéhyde, le 2-éthyl hexanal, le benzaldéhyde, l'acétone, de préférence au moins le formaldéhyde.

Selon un mode de réalisation préféré, les résines alkylphénol-aldéhyde modifiées utilisables selon l'invention sont susceptibles d'être obtenues à partir d'au moins une alkylamine ayant au moins un groupement amine primaire.

Selon un mode de réalisation préféré, les résines alkylphénol-aldéhyde modifiées utilisables selon l'invention sont susceptibles d'être obtenues à partir d'au moins une alkylamine à chaîne grasse ayant entre 12 et 24 atomes de carbone, de préférence entre 12-et 22 atomes de carbone.

Selon un mode de réalisation particulièrement préféré, les résines alkylphénol-aldéhyde modifiées utilisables selon l'invention sont susceptibles d'être obtenues à partir d'au moins une alkylamine ayant au moins un groupement amine primaire et comprenant une chaîne grasse ayant entre 12 et 24 atomes de carbone, de préférence entre 12 et 20 atomes de carbone.

Les alkylamines commerciales ne sont en général pas des composés purs mais des mélanges. Parmi les alkylamines commercialisées qui conviennent, on peut notamment citer les alkylamines à chaîne grasse commercialiséss sous les dénominations : Noram®, Duomeen®, Dinoram®, Trinoram®, Triameen®, Armeen®, Polyram®, Lilamin® et Cemulcat®.

La viscosité des résines de condensation alkylphénol-aldéhyde modifiées utilisables selon l'invention diluées avec 30% en masse de solvant aromatique mesurée à 50°C à l'aide d'un rhéomètre dynamique avec une vitesse de cisaillement de 100 s⁻¹ est en général comprise entre 1.000 et 10.000 mPa.s, de préférence entre 1.500 et 6.000 mPa.s, et avantageusement entre 2.500 et 5.000 mPa.s.

Les résines alkylphénol-aldéhyde modifiées selon l'invention peuvent être utilisées comme additifs pour améliorer les propriétés à froid d'huiles combustibles et de distillats d'huiles d'origine pétrolière et/ou d'origine renouvelable, et plus particulièrement des distillats moyens dont la plage de température d'ébullition est majoritairement comprise entre 100 et 500°C.

Les huiles brutes et les distillats moyens, obtenus à partir d'huiles brutes d'origine pétrolière par distillation, comme le gazole, le carburant diesel ou le fioul domestique, contiennent, selon la provenance des huiles brutes, différentes quantités de n-alcanes ou n-paraffines qui par abaissement de la température, typiquement en dessous de 0 °C, cristallisent sous forme de cristaux sous forme de plaquettes qui ont tendance à s'agglomérer : il se produit alors une détérioration des caractéristiques d'écoulement des huiles et distillats ; on constate alors des difficultés lors du transport, du stockage et/ou de l'huile ou le combustible : les cristaux de cire ayant tendance à boucher tuyaux, canalisations, pompes et filtres, par exemple dans les circuits du carburant des véhicules automobiles.

En hiver ou dans des conditions d'utilisation de l'huile ou du distillat à température inférieure à 0°C, le phénomène de cristallisation peut conduire à des dépôts sur les parois des canalisations, voire à un bouchage complet.

Ces problèmes sont bien connus dans le domaine des carburants et combustibles hydrocarbonés liquides où de nombreux additifs ou mélanges d'additifs ont été proposés et sont commercialisés pour réduire la taille des cristaux de cire et/ou changer leur forme et/ou les empêcher de se former. Une taille de cristaux la plus faible possible est préférée car elle minimise les risques de bouchage ou de colmatage de filtre.

Les agents d'amélioration d'écoulement habituels pour les huiles brutes et les distillats moyens sont des co- et ter-polymères d'éthylène et d'ester(s) vinylique(s) et/ou acrylique(s), seuls ou en mélange avec des composés solubles dans l'huile de bas poids moléculaire ou des polymères qui contiennent un ou plusieurs groupements ester, amide, imide, ammonium substitué par au moins une chaine alkyle.

Outre l'amélioration de l'écoulement de l'huile et du distillat, un autre but des additifs d'amélioration de l'écoulement est d'assurer la dispersion des cristaux de paraffines, de manière à retarder ou empêcher la sédimentation des cristaux de paraffines et donc la formation d'une couche riche en paraffines en fond de récipients, cuves ou réservoirs de stockage ; ces additifs dispersants de paraffines dénommés WASA (acronyme du terme anglais *wax anti-settling additive*)

Les inventeurs ont constaté que les résines alkylphénol-aldéhyde modifiées selon l'invention possèdent une activité dispersante des paraffines: elles permettent de limiter la sédimentation des paraffines cristallisées sans ajout d'agent dispersant supplémentaire. Ainsi un mélange de co- et/ou ter-polymère(s) d'éthylène et d'ester(s) vinylique(s) et /ou ester(s) acrylique(s) avec au moins une résine alkylphénol-aldéhyde modifiée objet de l'invention permet d'éviter la sédimentation des cristaux de paraffines à basse température.

Les résines alkylphénol-aldéhyde modifiées selon l'invention peuvent être utilisées pour améliorer le comportement à froid et en particulier la dispersion des paraffines dans les carburants et combustibles liquides à base d'huiles hydrocarbonées et de distillats moyens dont la plage de températures d'ébullition est majoritairement comprise entre 100 et 500°C.

En particulier les carburants et combustibles liquides dans lesquels les résines alkylphénol-aldéhyde modifiées selon l'invention sont ajoutées sont par exemple le carburant jet, le gazole ou carburant diesel, le fioul domestique, le fioul lourd qui ont un domaine d'ébullition allant de 120 à 500 °C, de préférence 140 à 400 °C.

En général la teneur en soufre des compositions de carburants et combustibles liquides est inférieure à 5.000 ppm, de préférence inférieure à 500 ppm, et plus préférentiellement inférieure à 50 ppm, voire même inférieure à 10 ppm et avantageuse sans soufre, notamment pour les carburants de type gazole et jet.

Les carburants et combustibles liquides comprennent des distillats moyens de température d'ébullition comprise entre 100 et 500°C ; leur température de cristallisation commençante Tcc est souvent supérieure ou égale à -20°C, en général comprise entre -15°C et +10°C. Ces distillats peuvent par exemple être choisis parmi les distillats obtenus par distillation directe d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, et/ou leurs mélanges.

Les carburants et combustibles liquides peuvent également contenir des distillats issus des opérations de raffinage plus complexes que ceux issus de la distillation directe des hydrocarbures qui peuvent par exemple provenir des procédés de craquage, hydrocraquage et/ou craquage catalytique et des procédés de viscoréduction.

Les carburants et combustibles liquides peuvent également contenir de nouvelles sources de distillats, parmi lesquelles on peut notamment citer :
- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL,
- et les huiles végétales et/ou animales et/ou leurs esters, tels que les esters méthyliques ou éthyliques d'huiles végétales (EMHV, EEHV)
- les huiles végétales et/ou animales hydrotraitées et/ou hydrocraquées et/ou hydrodéoxygénées (HDO)
- ou encore les biodiesel d'origine animale et/ou végétale.

Ces nouvelles bases carburants et combustibles peuvent être utilisées seules ou en mélange avec des distillats moyens pétroliers classiques comme base carburant et/ou base de fioul domestique ; elles comprennent en général de longues chaînes paraffiniques supérieures ou égales à 10 atomes de carbone et préférentiellement de C14 à C30.

Selon un mode de réalisation de l'invention, les résines alkylphénol-aldéhyde modifiées selon l'invention sont utilisées dans les carburants et combustibles liquides en association avec au moins un additif améliorant l'écoulement à froid, tels que les co-polymères et ter-polymères d'éthylène et d'ester(s) vinylique(s) et/ou acrylique(s). A titre d'exemple d'additifs améliorant l'écoulement à froid de type copolymères, on peut citer les EVA (copolymères d'éthylène et d'acétate de vinyle) ; à titre d'exemples de ter-polymères, on peut citer ceux qui sont décrits dans EP 1 692 196, WO09/106743, WO09/106744.

Selon un mode de réalisation de l'invention, les résines alkylphénol-aldéhyde modifiées selon l'invention peuvent être utilisées en association avec au moins un additif dispersant de paraffines différent des résines alkylphénol-aldéhyde modifiées selon l'invention. Parmi les additifs dispersants les paraffines, on peut citer les composés azotés polaires.

Selon un mode de réalisation préféré, les résines alkylphénol-aldéhyde modifiées selon l'invention sont utilisées dans les carburants et combustibles liquides sans ajout de dispersant, choisi par exemple parmi les composés azotés polaires.

Selon un mode de réalisation préféré, les résines alkylphénol-aldéhyde modifiées selon l'invention sont utilisées en association avec au moins un additif dispersant de paraffines différent des résines alkylphénol-aldéhyde modifiées selon l'invention, tel que par exemple une résine alkylphénol-aldéhyde non modifiée et éventuellement avec au moins un additif améliorant l'écoulement à froid.

Selon un mode de réalisation préféré, on dissout ou disperse chaque additif séparément ou les mélanges d'additifs avec un ou plusieurs agents solvants ou dispersants avant l'addition aux huiles ou aux distillats. Des agents solvants ou dispersants sont par exemple des hydrocarbures aliphatiques et/ou aromatiques ou des mélanges d'hydrocarbures, par exemple des fractions d'essence, du kérosène, le décane, le pentadécane, le toluène, le xylène, et/ou l'éthylbenzène et/ou des mélanges de solvants commerciaux comme Solvarex 10, Solvarex LN, Solvent Naphta, Shellsol AB, Shellsol D, Solvesso 150, Solvesso 150 ND, Solvesso 200, Exxsol, ISOPAR.

On peut également ajouter des adjuvants de dissolution polaires, comme le 2-éthylhexanol, le décanol, l'isodécanol et/ou l'isotridécanol.

Outre les additifs mentionnés dans les modes de réalisation ci-dessus, à savoir les résines alkylphénol-aldéhyde modifiées selon l'invention, les additifs améliorant l'écoulement à froid les additifs dispersant de paraffines, d'autres additifs peuvent également être ajoutés tels que les agents inhibiteurs de corrosion, les additifs de détergence, les agents anti-trouble, les additifs améliorant la conductivité, les colorants, les réodorants, les additifs de lubrifiance ou d'onctuosité, .....

Parmi ces autres additifs, on peut citer particulièrement :
a) les additifs procétane, notamment (mais non limitativement) choisis parmi les nitrates d'alkyle, de préférence le nitrate de 2-éthyl hexyle, les peroxydes d'aroyle, de préférence le peroxyde de benzyle, et les peroxydes d'alkyle, de préférence le peroxyde de di ter-butyle ;
b) les additifs anti-mousse, notamment (mais non limitativement) choisis parmi les polysiloxanes, les polysiloxanes oxyalkylés, et les amides d'acides gras issus d'huiles végétales ou animales ; des exemples de tels additifs sont donnés dans EP 861 182, EP 663 000, EP 736 590 ;
c) les additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines ; des exemples de tels additifs sont donnés dans EP 938 535 ;
d) les additifs de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques ; des exemples de tels additifs sont donnés dans les documents suivants: EP 680 506, EP 860 494, WO 98/04656, EP 915 944, FR2 772 783, FR 2 772 784 ;
e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans EP 71 513, EP 100 248, FR 2 528 051, FR 2 528 051, FR 2 528 423, EP1 12 195, EP 1 727 58, EP 271 385, EP 291367 ;
f) les additifs d'anti-sédimentation et/ou dispersants de paraffines notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne ; des résines alkyl phénol/aldéhyde différentes des résines alkylphénol/aldéhyde selon l'invention ; des exemples de tels additifs sont donnés dans EP 261 959, EP593 331, EP 674 689, EP 327 423, EP 512 889, EP 832 172, US 2005/0223631, US 5 998 530, WO 93/14178 ;
g) les additifs polyfonctionnels d'opérabilité à froid choisis notamment dans le groupe constitué par les polymères à base d'oléfine et de nitrate d'alkényle tels que décrits dans EP 573 490 ;
h) d'autres additifs améliorant la tenue à froid et la filtrabilité (CFI), tels que les copolymères EVA et/ou EVP ;
i) les anti-oxydants de type phénoliques encombrés ou aminés de type paraphénylène diamine alkylés ;
j) les passivateurs de métaux, tels que les triazoles, les benzotriazoles alkylés ;
k) les séquestrants de métaux comme la disalicylidène propane diamine (DMD)
l) les neutralisateurs d'acidité tels que les alkylamines cycliques.

Ces autres additifs ainsi que les résines alkylphénol-aldéhyde modifiées selon l'invention sont en général ajoutés en quantité allant de 5 à 1 000 ppm (chacun)

### Exemple 1 Synthèse de résines alkylphénol-aldéhyde modifiées par réaction de Mannich

Dans une première étape, on prépare plusieurs résines alkylphénol-aldéhyde par condensation de para-nonylphénol et de formaldéhyde (par exemple selon le mode opératoire décrit dans EP 857 776) de viscosités à 50°C (mesurées à 50°C à l'aide d'un rhéomètre dynamique avec une vitesse de cisaillement de 10 s⁻¹ sur la résine diluée avec 30% en masse de solvant aromatique (Solvesso 150) comprises entre 1.800 et 4.800 mPa.s.

Dans une seconde étape, les résines alkylphénol-aldéhyde issues de la première étape sont modifiées par réaction de Mannich par ajout de formol et d'alkyl (poly)amine primaire (par exemple une alkylpolyamine ayant une chaîne alkyle en C12 (commercialisée sous la dénomination Noram® C) pour la résine (1 A).

Les caractéristiques des résines obtenues sont réunies dans le tableau 1 ci-dessous : alkylamine utilisée, taux de matières sèches, viscosité à 50°C (mesurée sur résine diluée avec 30 % massique de Solvesso 150, vitesse cisaillement 10 s⁻¹)

| N° résine | alkylamine utilisée | Matières sèches | Viscosité à 50°C (mPa.s) | Nombre moyen de noyaux phénoliques par molécule de résine |
|---|---|---|---|---|
| | | (1g-30min-200°C) | | |
| 1A | Noram C | 72,2% | 3700 | 8,0 |
| 2A | Trinoram S | 70,30% | 3675 | 4,1 |
| 2B | Trinoram S | 70,20% | 1950 | 1,4 |
| 2C | Trinoram S | 70,10% | 4855 | 14,1 |
| 2D | Trinoram S | 69,80% | 4590 | 16,5 |
| 2E | Trinoram S | 69,00% | 3180 | 10,1 |
| 2F | Trinoram S | 70,10% | 4990 | 15,5 |
| 3A | Noram SH | 72,80% | 2485 | 3,7 |

### Exemple 2-Tests de sédimentation ARAL

On évalue chacune des résines alkylphénol modifiées de l'exemple 1 en tant qu'additif anti-sédimentation ou WASA seule (i-e non associée avec un autre composant dispersant WASA) dans un gazole moteur (GOM 1) additivé avec 300 ppm massique d'un additif de TLF qui est un EVA en solution à 70% en masse dans un solvant aromatique (type Solvesso 150) commercialisé sous la dénomination CP7936C.

Chaque résine alkylphénol modifiée est incorporée dans le gazole à une concentration de 70 ppm massique (la résine étant dissoute avec 30 % en masse de solvant, 100 ppm massique de solution à 70% de matière active sont mis en œuvre).

A titre comparatif, on évalue également le gazole GOM 1 additivé avec 300 ppm de l'additif de TLF décrit précédemment et la résine alkylphénol- aldéhyde non modifiée (résine 1 comparative de viscosité mesurée à 50°C à l'aide d'un rhéomètre dynamique diluée avec 30% en masse Solvesso 150 égale à 2.000 mPa.s)

Les propriétés d'anti-sédimentation des additifs sont évaluées par l'essai de sédimentation ARAL suivant : 500mL de distillats moyens additivés sont refroidis dans des éprouvettes de 500mL dans une enceinte climatique à -13°C selon le cycle de température suivant : passage de +10°C à -13°C en 4h puis isotherme à -13°C pendant 16h. A la fin de du test, une cotation visuelle de l'aspect de l'échantillon et du volume de phase sédimentée est effectuée, puis les 20% du volume inférieur sont prélevés, pour caractérisation en point de trouble PTR (NF EN 23015) et TLF (NF EN 116). On compare ensuite l'écart de PTR et TLF avant et après sédimentation (i.e. sur les 20% en volume du bas de l'éprouvette), plus l'écart est faible, meilleure est la performance de la propriété mesurée PTR, TLF

Les résultats sont réunis dans le tableau 2 ci-dessous.

**Tableau 2**

| N° résine ajoutée | Volume de sédiments (mL pour 500 mL d'échantillon) | Cotation visuelle | Mesure TLF (°C) NF EN 116 | | | Mesure PTR (°C) NF EN 23015 | | |
|---|---|---|---|---|---|---|---|---|
| | | | Avant | Après | Ecart | Avant | Après | Ecart |
| - | | | -16 | | | | | |
| Résine 1 comparative | 115 | Léger trouble | -16 | -4 | -12 | -6 | 4 | -10 |
| Résine 1A | 90 | trouble | -18 | -9 | -9 | -5 | 0 | -5 |
| Résine 2A | 35 | trouble | -19 | -10 | -9 | -6 | -2 | -4 |
| Résine 2B | 50 | trouble | -19 | -13 | -6 | -6 | -2 | -4 |
| Résine 2C | 0 | homogène | -18 | -19 | 1 | -6 | -6 | 0 |
| Résine 3A | 105 | Léger trouble | -18 | -4 | -14 | -6 | 3 | -9 |

On constate que la résine alkylphénol classique non modifiée (résine 1 comparative) n'est pas performante en anti-sédimentation lorsqu'elle est utilisée seule (i.e. sans ajout de dispersant) tandis que les résines alkylphénol modifiées selon l'invention le sont, la plus performante étant la résine 2C, contenant de la dipropylènetriamine de suif, particulièrement préférée.

On procède à de nouveaux tests de sédimentation ARAL avec le même gazole dont le taux d'additivation en additif de TLF est inchangé (300 ppmm) mais pour lequel le taux d'additivation en résine alklphénol-aldéhyde modifiée (résine 2C) est différent ; là encore, la résine alkylphénol-aldéhyde modifiée est ajoutée dans une solution concentrée à 70 % en masse de matière active (résine) dans 30 % de solvant. A titre comparatif, le gazole GOM 1 additivé avec 300 ppm de l'additif de TLF décrit précédemment et une résine alkylphénol- aldéhyde non modifiée (résine 1 comparative) associée à un dispersant polaire azoté de type dodécénylsuccinique anhydride amidifié avec une dipropylènetriamine de suif.

Le mélange d'additifs contient 20 % en masse de résine 1 et 80 % en masse de dispersant polaire dodécénylsuccinique anhydride amidifié avec une dipropylènetriamine de suif.Les résultats sont réunis dans le tableau 3 ci-dessous.

**Tableau 3**

| Additif(s) WASA utilisé(s) | Résine ajoutée (ppm de solution à 70 %m de matière active) | Cotation visuelle Eprouvette (volume de sédiments en mL sur 500 mL d'échantillon) | | Mesure TLF | | | Mesure PTR | | |
|---|---|---|---|---|---|---|---|---|---|
| | | | | (°C) | | | (°C) | | |
| | | | | NF EN 116 | | | NF EN 23015 | | |
| | | | | Avant | Après | Ecart | Avant | Après | Ecart |
| Pas de WASA | 0 | | | -16 | | | | | |
| Résine 2C | 75 | <5 | homogène | -20 | -17 | -3 | -6 | -6 | 0 |
| Résine 1 comparative + dispersant | 75 | <10 | homogène | -18 | -17 | -1 | -7 | -6 | -1 |
| Résine 2C | 50 | 10 | | -19 | -17 | -2 | -6 | -6 | 0 |
| Résine 1 comparative+ dispersant | 50 | <10 | homogène | -20 | -19 | -1 | -7 | -6 | -1 |
| Résine 2C | 25 | 10 | homogène | -18 | -18 | 0 | -6 | -6 | 0 |
| Résine 1 comparative + dispersant | 25 | 125 | Trouble au fond | -18 | -9 | -9 | -6 | 1 | -7 |
| Résine 2C | 15 | 15 | homogène | -18 | -19 | 1 | -6 | -5 | -1 |
| Résine 1 comparative + dispersant | 15 | 115 | Trouble au fond | -16 | -7 | -9 | -6 | 1 | -7 |

Ces résultats d'efficacité anti-sédimentation en fonction de la concentration (en matière active) montrent que la résine alkylphénol modifiée 2C selon l'invention est plus performante que l'association résine alkylphénol classique + dispersant (composé azoté polaire) en dessous de 50ppm de matière active.

On procède à de nouveaux tests de sédimentation ARAL avec la résine 2C dans 2 autres gazoles moteur (GOM 2 (gazole de type B5, i.e. contenant 5% volume d'EMHV) et GOM 3 (gazole de type B0 sans EMHV) dont les caractéristiques sont réunies dans le tableau 6 ci-dessous. A titre comparatif, on évalue l'efficacité anti-sédimentation d'une résine alkylphénol-aldéhyde non modifiée (résine 1 comparative) associée à un dispersant composé azoté polaire de type dodécénylsuccinique anhydride avec une dipropylènetriamine de suif ; les résultats sont réunis dans les tableaux 4 (essais dans le GOM 2) et 5 (essais dans le GOM 3)

**Tableau 4 : évaluation dans GOM 2**

| Additif(s) WASA utilisé(s) | Résine ajoutée (ppm de solution à 70 %m de matière active) | Cotation visuelle Eprouvette 500 mL | | Mesure TLF | | | Mesure PTR | | |
|---|---|---|---|---|---|---|---|---|---|
| | | | | (°C) | | | (°C) | | |
| | | | | NF EN 116 | | | NF EN 23015 | | |
| | | | | Avant | Après | Ecart | Avant | Après | Ecart |
| Résine 1 comparative+ dispersant | 112,5 | 100 | | -27 | -10 | 17 | -4 | 1 | 5 |
| Résine 2C | 112,5 | <5 | | -21* | -16 | 5 | -4 | -4 | 0 |

| | | | | | | | | | |
|---|---|---|---|---|---|---|---|---|---|
| *point dur à -16 °C | | | | | | | | | |

**Tableau 5 : évaluation dans GOM 3**

| Additif(s) WASA utilisé(s) | Résineajoutée (ppm de solution à 70 %m de matière active) | Cotation visuelle Eprouvette 500 mL | | Mesure TLF | | | Mesure PTR | | |
|---|---|---|---|---|---|---|---|---|---|
| | | | | (°C) | | | (°C) | | |
| | | | | NF EN 116 | | | NF EN 23015 | | |
| | | | | Avant | Après | Ecart | Avant | Après | Ecart |
| Résine 1 comparative+ dispersant | 100 | 0 | | -19 | -19 | 0 | -7 | -7 | 0 |
| Résine 2C | 100 | <5 | | -19 | -18 | 1 | -7 | -7 | 0 |

**Tableau 6**

| GOM | GOM 1 | GOM 2 | GOM 3 |
|---|---|---|---|
| Paraffines totales (%masse) | 14,72 | 12,95 | 13,56 |
| TLF (°C) NF EN 116 | -6 | -5 | -7 |
| PTE (°C) NF-T60-105 | -15 | -12 | -12 |
| PTR (°C) NF EN 23015 | -7 | -5 | -5 |
| MV15 (kg/m³) NF EN ISO12185 | 826,5 | 829,23 | 824,77 |
| Teneur en soufre (mg/kg) | 18,6 | 7,80 | 7,10 |
| Mono Aromatiques (% masse) NF EN 12916 | 19 | 15,7 | 15,7 |
| Di Aromatiques (% masse) NF EN 12916 | 4 | 2 | 1,8 |
| Tri aromatiques (% masse) NF EN 12916 | 0,3 | 0,5 | 0,5 |
| Aromatiques totaux (% masse) NF EN 12916 | 23,3 | 18,2 | 18 |
| Poly Aromatiques (% masse) NF EN 12916 | 4,3 | 2,5 | 2,3 |

| Distillation ASTM D86 (°C) | | | |
|---|---|---|---|
| 0 % | 157,2 | 158,6 | 161,5 |
| 5 % | 178,7 | 183,7 | 183,9 |
| 10 % | 186,9 | 194 | 193,3 |
| 20 % | 207,9 | 215,4 | 211,9 |
| 30 % | 229,9 | 236,1 | 229,7 |
| 40 % | 250,1 | 255,60 | 248,1 |
| 50 % | 266,9 | 273,6 | 264 |
| 60 % | 282 | 289,1 | 277,9 |
| 70 % | 298,1 | 303,7 | 291,1 |
| 80 % | 315,5 | 319,5 | 306,7 |
| 90 % | 337,5 | 337,1 | 326,9 |
| 95 % | 353,5 | 350 | 343,6 |
| 100 % | 356,9 | 358,6 | 354,5 |
| Teneur en EMHV (%vol) | 0 | 5 | 0 |

## Revendications

1. Utilisation de résines alkylphénol-aldéhyde modifiées comme additifs pour améliorer les propriétés à froid d'huiles combustibles et distillats d'origine pétrolière et/ou d'origine renouvelable, lesdites résines étant susceptibles d'être obtenues par réaction de Mannich d'une résine de condensation alkylphénol-aldéhyde
• avec au moins un aldéhyde et/ou une cétone ayant de 1 à 8 atomes de carbone, de préférence de 1 à 4 atomes de carbone;
• et au moins un composé hydrocarboné ayant au moins un groupement alkylmonoamine ou alkylpolyamine, ayant entre 4 et 30 atomes de carbone,
la dite résine de condensation alkylphénol-aldéhyde étant elle-même susceptible d'être obtenues par condensation
• d'au moins un alkylphénol substitué par au moins un groupement alkyle, linéaire ou ramifié, ayant de 1 à 30 atomes de carbone, de préférence un monoalkylphénol,
• avec au moins un aldéhyde et/ou une cétone ayant de 1 à 8 atomes de carbone, de préférence de 1 à 4 atomes de carbone.

2. Utilisation selon la revendication 1, dans laquelle les résines alkylphénol-aldéhyde modifiées sont susceptibles d'être obtenues à partir d'au moins un alkylphénol substitué en para, de préférence à partir du p-nonylphénol.

3. Utilisation selon la revendication 1 ou 2, dans laquelle les résines alkylphénol-aldéhyde modifiées sont susceptibles d'être obtenues à partir d'au moins un aldéhyde et/ou une cétone choisi parmi le formaldéhyde, l'acétaldéhyde, le propionaldéhyde, le butyraldéhyde, le 2-éthyl hexanal, le benzaldéhyde, l'acétone, et de préférence à partir d'au moins le formaldéhyde.

4. Utilisation selon l'une quelconque des revendications 1 à 3, dans laquelle les résines alkylphénol-aldéhyde modifiées sont susceptibles d'être obtenues à partir d'au moins une alkylamine ayant au moins un groupement amine primaire, et avantageusement au moins un composé dont tous leurs groupements amine sont des amines primaires.

5. Utilisation selon l'une quelconque des revendications 1 à 4, dans laquelle les résines alkylphénol-aldéhyde modifiées sont susceptibles d'être obtenues à partir de p-nonylphénol, de formaldéhyde et d'au moins un composé hydrocarboné ayant au moins un groupement alkylmonoamine ou alkylpolyamine.

6. Utilisation selon l'une quelconque des revendications 1 à 5, dans laquelle les résines alkylphénol-aldéhyde modifiées sont susceptibles d'être obtenues à partir d'au moins une alkylamine à chaîne grasse ou d'un mélange d'alkylamines à chaîne grasse, et de préférence d'alkylamine(s) ayant un nombre d'atomes de carbone entre 12 et 24, de préférence entre 12 et 22.

7. Utilisation selon l'une quelconque des revendications 1 à 6, dans laquelle les résines alkylphénol-aldéhyde modifiées one une viscosité à 50°C mesurée à l'aide d'un rhéomètre dynamique à une vitesse de cisaillement de 100 s⁻¹ sur une solution de ladite résine diluée avec 30% en masse d'un solvant aromatique comprise entre 1.000 et 10.000 mPa.s, de préférence 1.500 et 6.000 mPa.s et avantageusement entre 2.500 et 5.000 mPa.s.

8. Utilisation selon la revendication 2, dans laquelle les résines alkylphénol-aldéhyde modifiées sont susceptibles d'être obtenues à partir du para-nonylphénol.

9. Utilisation selon la revendication 8, dans laquelle les résines alkylphénol-aldéhyde modifiées ont un nombre moyen de noyaux phénoliques par molécule de résine est supérieur à 6 et inférieur ou égal à 25, de préférence compris entre 8 et 17

10. Utilisation selon l'une quelconque des revendications 1 à 9, de résines alkylphénol-aldéhyde modifiées comme additifs pour améliorer les propriétés à froid de carburants et combustibles liquides hydrocarbonés.

11. Utilisation selon la revendication 10 d'une ou plusieurs résines pour améliorer la dispersion de paraffines et/ou limiter la sédimentation des paraffines dans les carburants et combustibles liquides à base d'huiles hydrocarbonées et de distillats moyens dont la plage de températures d'ébullition est majoritairement comprise entre 100 et 500°C.

12. Utilisation selon la revendication 10 ou 11 d'une ou plusieurs résines incorporées dans des carburants et/ou combustibles ayant un domaine d'ébullition allant de 120 à 500 °C, de préférence 140 à 400 °C, et avantageusement dans les carburants jet, les gazoles ou carburants diesel, le fioul domestique, le fioul lourd.

13. Compositions de carburants et combustibles hydrocarbonés liquides dont la plage de températures d'ébullition est majoritairement comprise entre 100 et 500°C comprenant :
une proportion majoritaire de composés hydrocarbonés et/ou d'huiles végétales et/ou animales et/ou leurs esters d'huiles et/ou des biodiesels d'origine animale et/ou végétale
et une proportion minoritaire, de préférence comprise entre 5 et 5.000 ppm massique d'au moins une des résines telles que définies dans les revendications 1 à 9.

## Patentansprüche

1. Verwendung von modifizierten Alkylphenolaldehyd-Harzen als Additive zur Verbesserung der Kälteeigenschaften von Brennstoffölen und Destillaten auf Erdölbasis und/oder erneuerbarer Basis, wobei die Harze erhalten werden können durch Mannich-Reaktion eines Alkylphenolaldehyd-Kondensationsharzes
• mit mindestens einem Aldehyd und/oder einem Keton mit 1 bis 8 Kohlenstoffatomen, vorzugsweise 1 bis 4 Kohlenstoffatomen,
• und mindestens einer Kohlenwasserstoffverbindung mit mindestens einer Alkylmonoamin- oder Alkylpolyamingruppe, mit zwischen 4 und 30 Kohlenstoffatomen,
wobei das Alkylphenolaldehyd-Kondensationsharz selbst erhalten werden kann durch Kondensation
• mindestens eines Alkylphenols, das substituiert ist mit mindestens einer linearen oder verzweigten Alkylgruppe, mit 1 bis 30 Kohlenstoffatomen, vorzugsweise einem Monoalkylphenol,
• mit mindestens einem Aldehyd und/oder einem Keton mit 1 bis 8 Kohlenstoffatomen, vorzugsweise 1 bis 4 Kohlenstoffatomen.

2. Verwendung nach Anspruch 1, wobei die modifizierten Alkylphenolaldehyd-Harze aus mindestens einem Alkylphenol, substituiert in para, vorzugsweise aus p-Nonylphenol, erhalten werden können.

3. Verwendung nach Anspruch 1 oder 2, wobei die modifizierten Alkylphenolaldehyd-Harze erhalten werden können aus mindestens einem Aldehyd und/oder einem Keton, ausgewählt aus Formaldehyd, Acetaldehyd, Propionaldehyd, Butyraldehyd, 2-Ethylhexanal, Benzaldehyd, Aceton, und vorzugsweise aus mindestens Formaldehyd.

4. Verwendung nach einem der Ansprüche 1 bis 3, wobei die modifizierten Alkylphenolaldehyd-Harze erhalten werden können aus mindestens einem Alkylamin mit mindestens einer primären Amingruppe, und vorzugsweise mindestens einer Verbindung, von der alle Amingruppen primären Amine sind.

5. Verwendung nach einem der Ansprüche 1 bis 4, wobei die modifizierten Alkylphenolaldehyd-Harze erhalten werden können aus p-Nonylphenol, Formaldehyd und mindestens einer Kohlenwasserstoffverbindung mit mindestens einer Alkylmonoamin- oder Alkylpolyamingruppe.

6. Verwendung nach einem der Ansprüche 1 bis 5, wobei die modifizierten Alkylphenolaldehyd-Harze erhalten werden können aus mindestens einem Alkylamin mit einer Fettkette oder aus einer Mischung von Alkylaminen mit einer Fettkette, und vorzugsweise aus Alkylamin(en) mit einer Anzahl von Kohlenstoffatomen zwischen 12 und 24, vorzugsweise zwischen 12 und 22.

7. Verwendung nach einem der Ansprüche 1 bis 6, wobei die modifizierten Alkylphenolaldehyd-Harze eine Viskosität bei 50 °C, gemessen mit Hilfe eines dynamischen Rheometers bei einer Schergeschwindigkeit von 100 s⁻¹ in einer Lösung des Harzes, die mit 30 Massen-% eines aromatischen Lösungsmittels verdünnt ist, zwischen 1.000 und 10.000 mPa.s, vorzugsweise 1.500 und 6.000 mPa.s und vorteilhaft zwischen 2.500 und 5.000 mPa.s aufweisen.

8. Verwendung nach Anspruch 2, wobei die modifizierten Alkylphenolaldehyd-Harze aus para-Nonylphenol erhalten werden können.

9. Verwendung nach Anspruch 8, wobei die modifizierten Alkylphenolaldehyd-Harze eine mittlere Anzahl von Phenolkernen pro Harzmolekül aufweisen, die größer ist als 6 und kleiner oder gleich 25, vorzugsweise zwischen 8 und 17.

10. Verwendung nach einem der Ansprüche 1 bis 9, der modifizierten Alkylphenolaldehyd-Harze als Additive zur Verbesserung der Kälteeigenschaften von Kraftstoffen und flüssigen Kohlenwasserstoff-Brennstoffen.

11. Verwendung nach Anspruch 10 eines oder mehrerer Harze zur Verbesserung der Dispersion von Paraffinen und/oder Begrenzung der Sedimentation von Paraffinen in Kraftstoffen und flüssigen Brennstoffen auf der Basis von Kohlenwasserstoffölen und von Mitteldestillaten, deren Siedetemperaturbereich mehrheitlich zwischen 100 und 500 °C liegt.

12. Verwendung nach Anspruch 10 oder 11 eines oder mehrerer Harze, eingeschlossen in Kraftstoffen und/oder Brennstoffen mit einem Siedebereich von 120 bis 500 °C, vorzugsweise 140 bis 400 °C, und vorteilhaft in Jet-Kraftstoffen, Gasölen oder Dieselkraftstoffen, Heizöl, Schweröl.

13. Zusammensetzungen von Kraftstoffen und flüssigen Kohlenwasserstoffbrennstoffen, deren Siedetemperaturbereich mehrheitlich zwischen 100 und 500 °C liegt, umfassend:
einen mehrheitlichen Anteil von Verbindungen von Kohlenwasserstoffen und/oder von pflanzlichen und/oder tierischen Ölen und/oder ihren Estern von Ölen und/oder Biodieseln tierischen und/oder pflanzlichen Ursprungs, und einen Minderheitsanteil, vorzugsweise zwischen 5 und 5.000 ppm, bezogen auf die Masse, mindestens eines der Harze, wie in den Ansprüchen 1 bis 9 definiert.

## Claims

1. Use of modified alkylphenol-aldehyde resins as additives for improving the cold properties of fuel oils and distillates of petroleum origin and/or of renewable origin, said modified resins being obtainable by a Mannich reaction of an alkylphenol-aldehyde condensation resin
• with at least one aldehyde and/or a ketone having 1 to 8 carbon atoms, preferably 1 to 4 carbon atoms;
• and at least one hydrocarbon compound having at least one alkylmonoamine or alkylpolyamine group having between 4 and 30 carbon atoms,
said alkylphenol-aldehyde condensation resin being itself obtainable by condensation
• of at least one alkylphenol substituted by at least one linear or branched alkyl group having 1 to 30 carbon atoms, preferably a monoalkylphenol,
• with at least one aldehyde and/or a ketone having 1 to 8 carbon atoms, preferably 1 to 4 carbon atoms.

2. Use according to claim 1, wherein the modified alkylphenol-aldehyde resins are obtainable from at least one alkylphenol substituted in para position, preferably from p-nonylphenol.

3. Use according to claims 1 or 2, wherein the modified alkylphenol-aldehyde resins are obtainable from at least one aldehyde and/or a ketone chosen from formaldehyde, acetaldehyde, propionaldehyde, butyraldehyde, 2-ethyl hexanal, benzaldehyde, acetone, and preferably from at least formaldehyde.

4. Use according to any one of claims 1 to 3, wherein the modified alkylphenol-aldehyde resins are obtainable from at least one alkylamine having at least one primary amine group, and advantageously at least one compound all the amine groups of which are primary amines.

5. Use according to any one of claims 1 to 4, wherein the modified alkylphenol-aldehyde resins are obtainable from p-nonylphenol, formaldehyde and at least one hydrocarbon compound having at least one alkylmonoamine or alkylpolyamine group.

6. Use according to any one of claims 1 to 5, wherein the modified alkylphenol-aldehyde resins are obtainable from at least one alkylamine with aliphatic chain or a mixture of alkyl amines with aliphatic chain, and preferably alkylamine(s) having a number of carbon atoms between 12 and 24, preferably between 12 and 22.

7. Use according to any one of claims 1 to 6, wherein the modified alkylphenol-aldehyde resins have a viscosity at 50°C measured using a dynamic rheometer with a shear rate of 100 s⁻¹ on a solution of said resin diluted with 30% by mass of an aromatic solvent comprised between 1,000 and 10,000 mPa.s, preferably 1,500 and 6,000 mPa.s and advantageously between 2,500 and 5000 mPa.s.

8. Use according to claim 2, wherein the modified alkylphenol-aldehyde resins are obtainable from para-nonylphenol.

9. Use according to claim 8, wherein the modified alkylphenol-aldehyde resins have an average number of phenolic rings per resin molecule greater than 6 and less than or equal to 25, preferably comprised between 8 and 17.

10. Use according to any one of claims 1 to 9 of modified alkylphenol-aldehyde resins as additives to improve the cold properties of hydrocarbon fuels and liquid fuels.

11. Use according to claim 10 of one or more resins for improving the dispersion of waxes and/or for limiting the settling of waxes in motor fuels and liquid fuels based on hydrocarbon oils and middle distillates the boiling temperature range of which is in the majority comprised between 100 and 500°C.

12. Use according to claim 10 or 11 of one or more resins incorporated in motor fuels and/or fuels having a boiling range from 120 to 500°C, preferably 140 to 400°C, and advantageously in jet fuels, gas oils or diesel motor fuels, domestic fuel, heavy fuel oils.

13. Compositions of motor fuels and liquid hydrocarbon fuels the boiling temperatures range of which is in the majority comprised between 100 and 500°C comprising:
a majority proportion of hydrocarbon compounds and/or vegetable and/or animal oils and/or their esters of oils and/or biodiesels of animal and/or vegetable origin
and a minority proportion, preferably comprised between 5 and 5,000 ppm by mass of at least one of the resins as defined in claims 1 to 9.
